# FASCICULE DE BREVET EUROPEEN

(11) **EP 1 221 171 B1**
(45) Date de publication et mention de la délivrance du brevet: **25.06.2003**
(21) Numéro de dépôt: 00969623.8
(22) Date de dépôt: 10.10.2000
(51) Int. Cl.: H01H 73/00

(54) **CONTACTEUR-DISJONCTEUR**
SCHALTSCHUTZ
REVERSE CURRENT RELAY

(30) Priorité: 11.10.1999 FR 9912746
(43) Date de publication de la demande: 10.07.2002
(73) Titulaire: Schneider Electric Industries SAS, 92500 Rueil-Malmaison (FR)
(72) Inventeur: BAURAND, Gilles, F-78360 Montesson la Borde (FR); LEGLAYE, Dominique, F-92500 Rueil Malmaison (FR); TELLIER, Jean-Pierre, F-95310 Saint-Ouen-l'Aumone (FR)
(74) Mandataire: Carias, Alain
(86) Numéro de dépôt international: FR0002808
(87) Numéro de publication internationale: WO01027958

(56) Documents cités:
- EP-A- 0 199 612
- EP-A- 0 366 519
- WO-A-91/02369
- DE-A- 4 123 563
- FR-A- 2 598 027
- FR-A- 2 759 489
- GB-A- 2 234 396

## Description

La présente invention concerne un contacteur-disjoncteur comprenant des pôles à contacts séparables et, pour commander ces contacts, un électroaimant de commande, ainsi qu'un dispositif de protection auquel est associé un mécanisme de déclenchement.

Un contacteur-disjoncteur est un appareil électrique utilisé pour commander de façon volontaire l'alimentation de puissance et la coupure de lignes reliées à une charge telle qu'un moteur - c'est-à-dire la marche et l'arrêt de cette charge -, au moyen de l'électroaimant, qui est propre à sa partie "contacteur", et pour commander automatiquement la coupure de la charge au moyen du dispositif de protection, qui est propre à sa partie "disjoncteur", dès que le dispositif de protection constate un défaut électrique tel qu'un court-circuit sur au moins l'une des lignes .

Dans un tel appareil, l'électroaimant et le dispositif de protection sont appelés à solliciter chacun un organe multipolaire pour agir sur les contacts mobiles en réponse respectivement à une commande volontaire et à la détection d'un défaut électrique. Le mécanisme de déclenchement est susceptible de passer, sous l'action d'un déclencheur électromagnétique, d'un état de fermeture des contacts à un état d'ouverture des contacts, et il peut être réarmé par un organe de commande manuelle lui-même capable d'assurer l'ouverture et la fermeture des contacts.

Le document EP-366 519 décrit ainsi un contacteur-disjoncteur du type rappelé ci-dessus. Le dispositif de protection est essentiellement mécanique, ce qui nécessite un grand nombre d'appareils pour couvrir comme il est nécessaire la gamme voulue de tensions et de courants de puissance.

Le document FR- 2 759 489 décrit un contacteur-disjoncteur dans lequel l'électro-aimant assure la commutation des contacts aussi bien en mode contacteur qu'en mode disjoncteur. Le caractère hybride du fonctionnement de l'électroaimant et sa nécessaire rapidité de commande en mode disjoncteur sont alors problématiques.

L'invention a pour but de concilier une bonne fiabilité de fonctionnement en mode contacteur avec une grande rapidité de coupure en mode disjoncteur, tout en organisant les liaisons mécaniques et électriques de l'appareil de façon à couvrir la gamme souhaitée en tensions et courants de puissance avec un minimum de constituants.

Selon l'invention, un déclencheur électromagnétique est adjoint au mécanisme de commande, et le dispositif de protection est relié à l'électroaimant par une liaison de commande et au mécanisme de commande par une liaison de déclenchement, de manière à délivrer une énergie électrique d'alimentation à l'électroaimant sur la liaison de commande et, en cas de défaut électrique, un signal de déclenchement sur la liaison de déclenchement.

De préférence, le dispositif de protection est relié à des bornes d'alimentation en tension alternative ou continue, tandis que l'électroaimant est du type à courant continu fonctionnant sous une tension prédéterminée, et le dispositif de protection présente un circuit adaptateur de tension propre à convertir la tension d'alimentation en la tension prédéterminée pour alimenter l'électroaimant. De plus, le dispositif de protection est de préférence apte à délivrer à l'électroaimant un courant constant dans ses phases d'appel et de maintien.

Les conducteurs de puissance, les contacts séparables et des chambres de coupure associées peuvent avantageusement être logés dans une embase, le dispositif de protection étant un module amovible rapporté de manière interchangeable à l'embase, tandis que l'électroaimant et le mécanisme de commande sont associés de manière fixe à l'embase. Dans ce cas, l'électroaimant et le mécanisme de commande peuvent être logés dans une partie de l'embase située en avancée de manière que se succèdent du haut en bas de l'embase : l'électroaimant et le mécanisme de commande, le dispositif de protection et un emplacement dédié au logement d'un additif de contacts auxiliaires. Les bornes d'alimentation de la bobine de l'électroaimant peuvent alors être logées en adjacence au module de protection et latéralement à l'emplacement de l'additif de contacts auxiliaires.

L'embase peut présenter avantageusement entre le module de protection et l'emplacement de l'additif de contacts auxiliaires un emplacement dédié au logement d'un additif de communication. Il est avantageux que les emplacements réservés à l'additif de communication et à l'additif de contacts auxiliaires soient regroupés sous le module amovible de protection.

La description va être faite ci-après d'un mode de réalisation non limitatif de l'invention, en regard des dessins annexés.
La figure 1 est un schéma d'un contacteur-disjoncteur conforme à l'invention.
Les figures 2 à 4 sont des schémas de variantes du contacteur-disjoncteur.
Les figures 5 et 6 représentent le contacteur-disjoncteur en vue de face et en coupe selon le plan VI-VI.

Le contacteur-disjoncteur comporte des pôles contacteurs dotés de contacts fixes 10 et de contacts mobiles 11 auxquels sont associées des chambres de coupure 12. Les contacts fixes 10 sont reliés par des conducteurs de puissance 13,14 à des bornes de puissance amont (de source) 15 et respectivement à des bornes de puissance aval (de charge) 16 disposées dans le boîtier 17 de l'appareil ou sur des borniers rapportés sur celui-ci. Pour chaque pôle, les contacts mobiles 12 sont disposés sur un pont sollicité en direction de fermeture par un ressort 18 et en direction d'ouverture par un poussoir 19.

Le contacteur-disjoncteur comprend un électroaimant 20 de type monostable ou bistable et un dispositif électronique de protection et de commande 30 ; la finalité de l'électroaimant et du dispositif de protection est d'agir sur les poussoirs 19 des divers pôles. Il convient de remarquer que l'électroaimant 20 est du type à courant continu et qu'il est indépendant de la tension d'alimentation, par exemple du réseau, alors que différents dispositifs de protection et de commande 30 sont prévus en fonction de la tension d'alimentation : par exemple 24V DC, 24V AC, 72V AC, 240V AC, etc. Le dispositif 30 assure donc d'une part l'adaptation de la tension d'alimentation au niveau de la tension continue souhaitée pour l'électroaimant, et assure d'autre part la fourniture d'un courant constant, par exemple de l'ordre de 100 mA, à la bobine 21 de l'électroaimant 20 aussi bien à l'appel qu'en maintien.

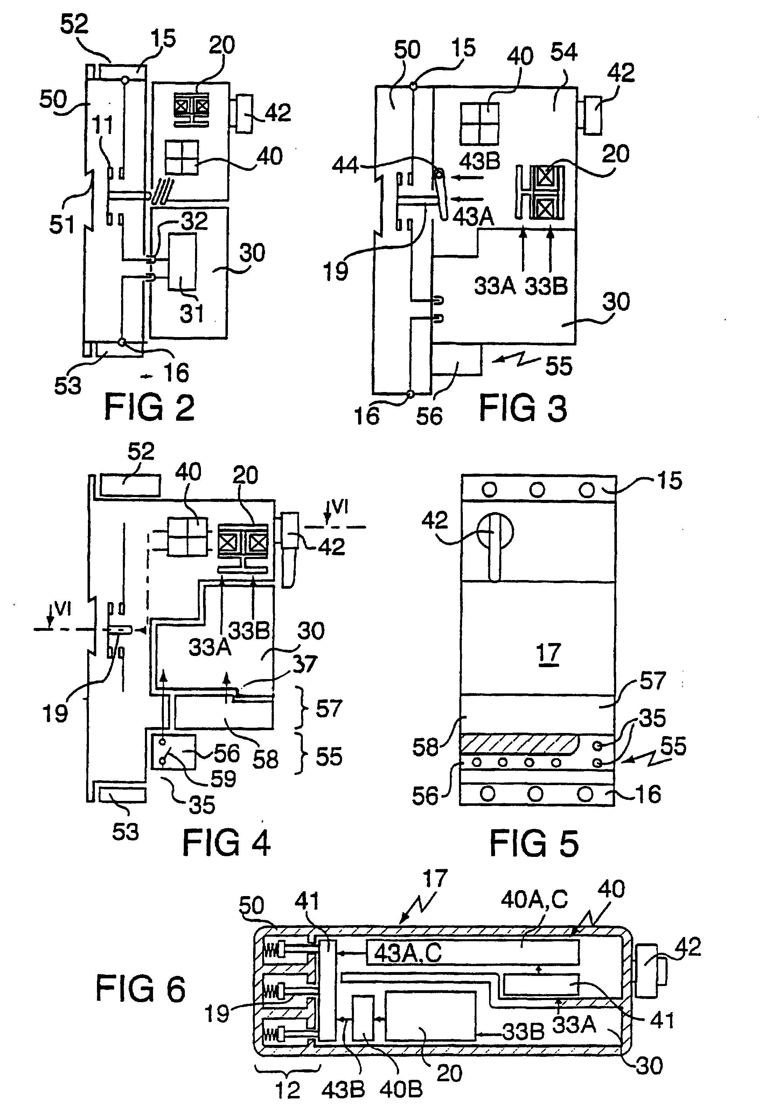

Le dispositif de protection et de commande 30, ci-après simplement désigné "dispositif de protection", comprend des capteurs de courant 31 qui détectent les courants des divers pôles ; les capteurs 31 peuvent comme indiqué figure 2 être connectés aux conducteurs de puissance 14 des divers pôles par des pinces ou fiches 32. Les capteurs 31 sont reliés à un circuit de protection 33 qui élabore un signal de défaut en cas de court-circuit constaté par les capteurs ou en cas d'autre défaut électrique. Le circuit de protection 33 est relié à sa sortie par une liaison de déclenchement 33A à un déclencheur électromagnétique 41 à action fugitive qui sollicite un levier d'une serrure appartenant à un mécanisme 40 de commande des contacts. Le circuit de protection 33 joue aussi le rôle de liaison d'alimentation et il est relié à un circuit de commande 34 qui détermine un courant régulé d'alimentation pour la bobine et qui est relié par une liaison de commande 34B à la bobine 21 de l'électroaimant 20.

La tension d'alimentation du dispositif de protection, du déclencheur et de la bobine est appliquée à des bornes 35 associées au dispositif de protection 30 et situées selon le cas sur le boîtier même du dispositif 30 ou sur un bornier ou additif annexé au dispositif ou à un socle auquel est rapporté le dispositif. Le dispositif de protection 30 est variable en fonction du calibre en courant du contacteur-disjoncteur et comprend un circuit de conversion de tension 36 relié aux bornes d'alimentation 35 du contacteur-disjoncteur et apte à fournir une tension de niveau prédéterminé au dispositif 30 et à la bobine 21 de l'électroaimant.

Un bouton de commande manuelle 42 susceptible de prendre une position marche ("on") et une position arrêt ("off") coopère avec le mécanisme 40 pour commander la commutation des contacts 11. Il est bien sûr possible de prévoir deux boutons, l'un à fonction marche et l'autre à fonction arrêt. Le mécanisme de commande 40 comprend
- une partie de déclenchement bistable 40A pilotée par le déclencheur électromagnétique 41,
- une partie de commande automatique bistable 40B pilotée par l'électroaimant 20 à partir d'un ordre de marche ou d'arrêt communiqué aux bornes 35 et
- une partie de commande manuelle 40C pilotée directement par le bouton 42 et influençable par la partie de déclenchement 40A.

Les parties 40A,40C agissent sur les contacts mobiles 11 via un organe coulissant ou pivotant 43A,C et la partie 40B agit sur les contacts mobiles 11 via un organe coulissant ou pivotant 43B. Ces deux organes 43A,C et 43B peuvent être distincts. Dans un mode de réalisation préféré, les organes 43A,C et 43B sont applicables sur un levier pivotant multipolaire et commun 44 lui-même applicable sur les poussoirs polaires 19 (voir figure 3).

Dans les modes de réalisation représentés figures 2 à 4, le contacteur-disjoncteur comporte une embase 50 et le dispositif de protection 30 est constitué par un module électronique de protection rapporté de manière interchangeable à l'embase et fonction du calibre de courant dévolu au contacteur-disjoncteur. L'embase présente à sa partie arrière des moyens de fixation 51 à un support tel qu'un rail normalisé ou une platine porteuse et comprend ou reçoit à ses parties haute et basse des borniers 52,53 logeant les bornes de puissance 15, 16. L'embase loge les conducteurs de puissance 13,14, les contacts fixes 10 et mobiles 11 et les chambres de coupure 12.

Sur la figure 2, l'électroaimant 20 et le mécanisme de commande 40 sont logés dans un module électromécanique de commande 60 assemblé à l'embase 50. Sur les figures 3 et 4, l'électroaimant 20 et le mécanisme de commande 40 sont logés dans un compartiment - ou deux compartiments -, situé(s) à la partie haute de l'embase 50 dans une avancée 54 de celle-ci. On dispose dans ce cas d'un ensemble électromécanique de commande et de coupure 50,20,40 qui est indépendant de la tension d'alimentation et qui reste inchangé pour divers calibres de courant, l'adaptation en tension étant assurée par la circuiterie électronique du module de protection 30 et le calibrage de courant étant assuré par le choix d'un module de protection 30 déterminé.

Sur la figure 3, l'électroaimant 20 et le module de protection 30 sont disposés dans l'avancée 54 de l'embase de manière que se succèdent du haut en bas de l'embase : l'électroaimant 20 et le mécanisme 40, le module de protection 30 et un emplacement 55 dédié au logement d'un additif 56 de contacts auxiliaires. Les bornes d'alimentation 35 de la bobine 21 de l'électroaimant 20 sont logées dans l'emplacement 55 ou dans l'additif 56 de contacts auxiliaires

Sur la figure 4, l'embase 50 présente entre le module de protection 30 et l'emplacement 55 de l'additif 56 de contacts auxiliaires un emplacement 57 dédié au logement d'un additif de communication 58 auquel on peut raccorder par exemple un bus de communication de l'appareil considéré avec d'autres appareils électriques, ce bus étant par exemple apte à alimenter et commander l'appareil. Le boîtier du module de protection 30 peut présenter un épaulement 37 apte à maintenir l'additif de communication 58 dans son emplacement 57.

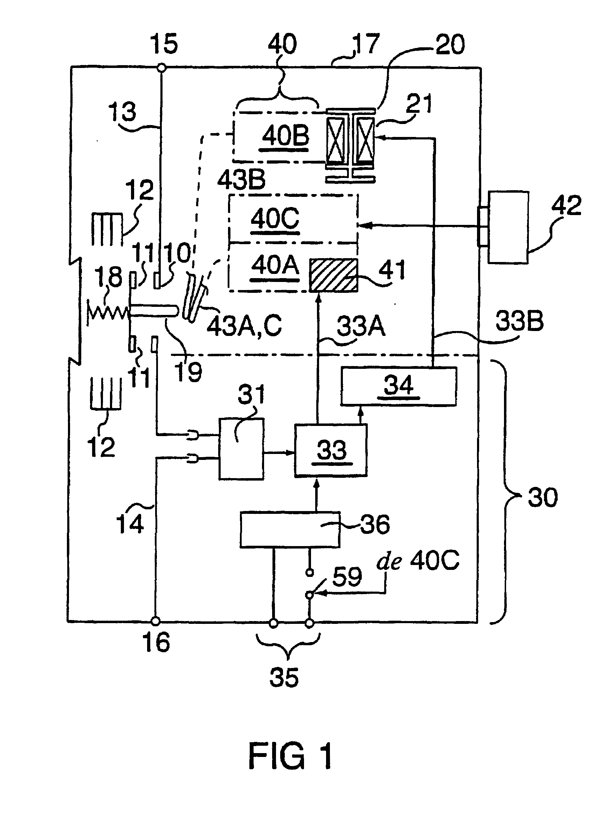

Un interrupteur 59 est disposé dans l'additif 56 (figure 4) ou dans le module de protection 30 (figure 1) pour couper l'alimentation de celui-ci quand le bouton est mis en position "arrêt.

Le contacteur-disjoncteur se monte et fonctionne de la manière suivante. A une embase 50 dotée d'un électroaimant de calibre souhaité est rapporté un module de protection 30 propre à adapter la tension à celle de fonctionnement nominal de l'électroaimant et à fournir à celui-ci un courant constant tant dans la phase d'appel que dans la phase de maintien.

Le bouton 42 étant supposé initialement en position marche, la tension appliquée aux bornes 35 entraîne via le circuit de commande 34 l'alimentation de la bobine 21 et, via la partie 40B du mécanisme 40, la fermeture des contacts 10,11. Une ouverture manuelle des contacts est provoquée par la mise du bouton 42 en position arrêt, via la partie 40C du mécanisme 40, tandis que l'interrupteur 59 s'ouvre comme indiqué plus haut. Une ouverture automatique des contacts est provoquée par la commutation du circuit 33 en fonction par exemple du signal de surintensité fourni par un capteur 31 ; cette commutation entraîne celle de la partie 40A du mécanisme 40 via le déclencheur 41. L'absence de tension aux bornes 35 entraîne la désexcitation de la bobine 21 et, via la partie 40B, l'ouverture des contacts.

## Revendications

1. Contacteur-disjoncteur comprenant :
- des conducteurs de puissance dotés de pôles à contacts séparables fixes et mobiles,
- un électroaimant de commande (20) et un dispositif de protection (30) aptes à agir par au moins un organe multipolaire sur les contacts mobiles (11) en réponse respectivement à une commande volontaire et à la détection d'un défaut électrique, le dispositif de protection comprenant des moyens (31) de détection des courants acheminés par les conducteurs de puissance et des moyens (33) d'élaboration d'un signal de déclenchement,
- un mécanisme de commande (40) des contacts, comprenant l'organe multipolaire et susceptible d'être actionné pour que l'organe multipolaire commute entre un état d'ouverture des contacts et un état de fermeture des contacts,
***caractérisé par le fait que*** :
- au mécanisme de commande est adjoint un déclencheur électromagnétique (41),
- le dispositif de protection (30) est relié à l'électroaimant (20) par une liaison de commande (33B) et au mécanisme de commande (40) par une liaison de déclenchement (33A), de manière à délivrer une énergie électrique d'alimentation à l'électroaimant sur la liaison de commande (33B) et, en cas de défaut, un signal de déclenchement sur la liaison de déclenchement (33A).

2. Contacteur-disjoncteur selon la revendication 1, **caractérisé par le fait que** le dispositif de protection (30) est relié à des bornes (35) d'alimentation en tension alternative ou continue, tandis que l'électroaimant (20) est du type à courant continu fonctionnant sous une tension prédéterminée, et le dispositif de protection présente un circuit adaptateur de tension (36) propre à convertir la tension d'alimentation en la tension prédéterminée pour alimenter l'électroaimant.

3. Contacteur-disjoncteur selon la revendication 1 ou 2, **caractérisé par le fait que** le dispositif de protection (30) délivre à l'électroaimant (20) un courant constant dans ses phases d'appel et de maintien.

4. Contacteur-disjoncteur selon la revendication 1, **caractérisé par le fait que** les contacts mobiles (11) sont situés sur des ponts de contact dont le déplacement est commandé par des poussoirs (19), l'électroaimant (20) et le mécanisme de commande (40) agissant sur un levier commun (44) applicable sur les poussoirs (19).

5. Contacteur-disjoncteur selon la revendication 1, **caractérisé par le fait que** les conducteurs de puissance (13,14), les contacts séparables (10,11) et des chambres de coupure associées (12) sont logés dans une embase (50) et le dispositif de protection (30) est un module amovible rapporté de manière interchangeable à l'embase, tandis que l'électroaimant (20) et le mécanisme de commande (40) sont associés de manière fixe à l'embase.

6. Contacteur-disjoncteur selon la revendication 5, **caractérisé par le fait que** l'électroaimant (20) et le mécanisme de commande (40) sont logés dans une partie (54) de l'embase (50) située en avancée de manière que se succèdent du haut en bas de l'embase : l'électroaimant (20) et le mécanisme de commande (40), le dispositif de protection (30) et un emplacement (55) dédié au logement d'un additif (56) de contacts auxiliaires.

7. Contacteur-disjoncteur selon la revendication 5, **caractérisé par le fait que** des bornes d'alimentation (35) de la bobine (21) de l'électroaimant (20) sont logées en adjacence au module de protection (30) dans l'emplacement (55) de l'additif (56) de contacts auxiliaires.

8. Contacteur-disjoncteur selon la revendication 5, **caractérisé par le fait que** l'embase (50) présente entre le module de protection (30) et l'emplacement (55) de l'additif (56) de contacts auxiliaires un emplacement (57) dédié au logement d'un additif (58) de communication.

9. Contacteur-disjoncteur comprenant :
- des conducteurs de puissance dotés de pôles à contacts séparables fixes et mobiles auxquels sont associées des chambres de coupure,
- un électroaimant (20) et un dispositif de protection (30) aptes à agir par au moins un organe d'entraînement multipolaire sur les contacts mobiles (11) en réponse respectivement à une commande volontaire et à la détection d'un défaut électrique, le dispositif de protection comprenant des moyens (31) de détection des courants acheminés par les conducteurs de puissance et une première liaison électrique (33B) avec l'électroaimant (20),
***caractérisé par le fait que** :*
- le dispositif de protection (30) est interchangeable et des moyens électroniques (36) de conversion de la tension d'alimentation en une tension adaptée à l'électroaimant (20) sont associés au dispositif de protection,
- le dispositif de protection est relié une deuxième liaison électrique (33A) à un déclencheur magnétique (41) apte à commander un mécanisme (40) de commande des contacts capable d'ouverture maintenue des contacts et réarmable par un bouton de commande manuelle (42),
- le mécanisme de commande (40) présente une partie bistable de commande automatique (40B) pilotée par l'électroaimant (20) et une partie bistable de déclenchement (40A) pilotée par le déclencheur magnétique (41) pour agir sur les pôles de contact.

10. Contacteur-disjoncteur selon la revendication 9, **caractérisé par le fait que** le dispositif de protection (30) comprend des moyens (34) assurant l'alimentation de la bobine (21) de l'électroaimant (20) avec un courant sensiblement constant dans les diverses phases de l'état marche du contacteur-disjoncteur.

## Patentansprüche

1. Schutzschalter mit Schützfunktion, der
- Leistungsleiter, die über Pole mit trennbaren festen und mobilen Kontakten verfügen,
- ein Steuerelektromagnet (20) und eine Schutzvorrichtung (30), die in der Lage sind, durch mindestens ein multipolares Organ auf die mobilen Kontakte (11) zu wirken, und dies als jeweilige Antwort auf eine willkürliche Steuerung und auf die Erkennung eines elektrischen Fehlers, wobei die Schutzvorrichtung über Mittel (31) zur Erkennung des Stroms, der von den Leistungsleitern geführt wird, und über Mittel (33) zur Erstellung eines Auslösesignals verfügt,
- ein Mechanismus (40) zur Steuerung der Kontakte, der das multipolare Organ umfasst, und das betätigt werden kann, damit das multipolare Organ zwischen einem offenen Zustand der Kontakte und einem geschlossenen Zustand der Kontakte umschalten kann, aufweist,
**dadurch gekennzeichnet, dass**:
- dem Steuermechanismus ein elektromagnetischer Auslöser (41) zugeordnet ist,
- die Schutzvorrichtung (30) an den Elektromagnet (20) über eine Steuerverbindung (33B) und an den Steuermechanismus (40) über eine Auslöseverbindung (33A) verbunden ist, damit eine elektrische Versorgungsenergie an den Elektromagneten auf der Steuerverbindung (33B) und, im Falle eines Fehlers, ein Auslösesignal auf die Auslöseverbindung (33A) übertragen wird.

2. Schutzschalter nach Anspruch 1, **dadurch gekennzeichnet, dass** die Schutzvorrichtung (30) an Klemmen (35) angeschlossen ist, die für die Versorgung mit Wechsel- oder Gleichspannung sorgen, wobei der Elektromagnet (20) des Gleichstromtyps ist und unter einer vorbestimmten Spannung funktioniert, und die Schutzvorrichtung einen Spannungsanpassungskreis (36) aufweist, der in der Lage ist, die Versorgungsspannung in die vorbestimmte Spannung umzuwandeln, um den Elektromagneten zu versorgen.

3. Schutzschalter nach Anspruch 1 oder 2, **dadurch gekennzeichnet, dass** die Schutzvorrichtung (30) dem Elektromagnet (20) konstanten Strom in den Anzugs- und Haltephasen liefert.

4. Schutzschalter nach Anspruch 1, **dadurch gekennzeichnet, dass** sich die mobilen Kontakte (11) auf Kontaktbrücken befinden, deren Verschiebung von Schiebern (19) gesteuert wird, wobei der Elektromagnet (20) und der Steuermechanismus (40) auf einen gemeinsamen Hebel (44) wirken, der auf die Schieber (19) auflegbar ist.

5. Schutzschalter nach Anspruch 1, **dadurch gekennzeichnet, dass** sich die Leistungsleiter (13, 14), die trennbaren Kontakte (10, 11) und die zugeordneten Abschaltkammern (12) in einem Basis-Unterteil (50) befinden und dass die Schutzvorrichtung (30) ein abnehmbares Modul ist, das dem Basis-Unterteil austauschbar hinzugefügt ist, während der Elektromagnet (20) und der Steuermechanismus (40) dem Basis-Unterteil fest zugeordnet sind.

6. Schutzschalter nach Anspruch 5, **dadurch gekennzeichnet, dass** sich der Elektromagnet (20) und der Steuermechanismus (40) in einem vorspringenden Teil (54) des Basis-Unterteils (50) befinden, so dass von oben nach unten im Basis-Unterteil folgende Komponenten aufeinander folgen: der Elektromagnet (20) und der Steuermechanismus (40); die Schutzvorrichtung (30) und ein Platz (55), der eigens für die Aufnahme eines Zusatzblockes (56) mit Hilfskontakten vorgesehen ist.

7. Schutzschalter nach Anspruch 5, **dadurch gekennzeichnet, dass** Versorgungsklemmen (35) der Spule (21) des Elektromagneten (20) neben dem Schutzmodul (30) im Platz (55) des Zusatzblockes (56) mit Hilfskontakten aufgenommen sind.

8. Schutzschalter nach Anspruch 5, **dadurch gekennzeichnet, dass** der Basis-Unterteil (50) zwischen dem Schutzmodul (30) und dem Platz (55) des Zusatzblockes (56) mit Hilfskontakten einen Platz (57) aufweist, der eigens für die Aufnahme eines Kommunikationszusatzblockes (58) vorgesehen ist.

9. Schutzschalter bestehend aus:
- Leistungsleitern mit Polen, die über trennbare feste und mobile Kontakte verfügen, denen Abschaltkammern zugeordnet sind,
- einem Elektromagnet (20) und einer Schutzvorrichtung (30), die in der Lage sind, durch mindestens ein multipolares Antriebsorgan auf die mobilen Kontakte (11) zu wirken und dies als jeweilige Antwort auf eine willkürliche Steuerung und auf die Erkennung eines elektrischen Fehlers, wobei die Schutzvorrichtung über Mittel (31) zur Erkennung des Stroms, der von den Leistungsleitern geführt wird, und über eine erste elektrische Verbindung (33B) mit dem Elektromagnet (20) verfügt.
**dadurch gekennzeichnet, dass**:
- die Schutzvorrichtung (30) austauschbar ist und dass elektronische Mittel (36) zur Umwandlung der Versorgungsspannung in eine dem Elektromagnet (20) angepasste Spannung der Schutzvorrichtung zugeordnet sind,
- die Schutzvorrichtung über eine zweite elektrische Verbindung (33A) an einen magnetischen Auslöser (41) angeschlossen ist, der in der Lage ist, ein Mechanismus (40) zur Steuerung der Kontakte zu steuern, der die Öffnung der Kontakte halten kann und der durch einen manuellen Steuerknopf (42) rückgestellt werden kann,
- der Steuermechanismus (40) einen bistabilen Steuerteil zur automatischen Steuerung (40B),der vom Elektromagneten (20) gesteuert wird und einen bistabilen Auflösungsteil (40A), der vom magnetischen Auslöser (41) gesteuert wird, aufweist um auf die Kontaktpole zu wirken.

10. Überlastschalter nach Anspruch 9, **dadurch gekennzeichnet, dass** die Schutzvorrichtung (30) Mittel (34) aufweist, die für die Versorgung der Spule (21) vom Elektromagneten (20) mit annähernd konstantem Strom in den verschiedenen Phasen des Betriebszustands vom Überlastschalter sorgt.

## Claims

1. Contactor - circuit breaker comprising:
- power conductors provided with poles having separable fixed and mobile contacts,
- a control electromagnet (20) acting in response to a deliberate control and a protection device (30) acting in response to detection of an electrical fault, on mobile contacts (11) through at least one multi-pole device, the protection device comprising means (31) to detect currents carried out by power conductors and means (33) to generate a trip signal,
- a contact control mechanism (40) comprising a multi-pole device and capable of being activated such that the multi-pole device switches between a contact open state and a contact closed state,
***characterized by** the fact that:*
- an electromagnetic tripping device (41) is used with the control mechanism,
- the protection device (30) is connected to the electromagnet (20) through a control link (33B) and to the control mechanism (40) through a trip link (33A), in order to output an electrical power supply for the electromagnet on the control link (33B) and in the case of a fault, a trip signal to the trip link (33A).

2. Contactor - circuit breaker according to claim 1, **characterized by** the fact that the protection device (30) is connected to AC or DC power supply terminals (35), whereas the electromagnet (20) is of the DC type operating at the predetermined voltage, and the protection device is provided with a voltage adapter circuit (36) capable of converting the power supply voltage into the predetermined voltage to power the electromagnet.

3. Contactor - circuit breaker according to claim 1 or 2, **characterized by** the fact that the protection device (30) outputs a constant current to the electromagnet (20) in its energize and hold phases.

4. Contactor - circuit breaker according to claim 1, **characterized by** the fact that the mobile contacts (11) are located on contact bridges, the displacement of which is controlled by pushers (19), the electromagnet (20) and the control mechanism (40) acting on a common lever (44) applicable to the pushers (19).

5. Contactor - circuit breaker according to claim 1, **characterized by** the fact that the power conductors (13, 14), the separable contacts (10, 11) and the associated extinguishing chambers (12) are located in a base (50) and the protection device (30) is a removable module added interchangeably to the base, whereas the electromagnet (20) and the control mechanism (40) are associated in a fixed manner with the base.

6. Contactor - circuit breaker according to claim 5, **characterized by** the fact that the electromagnet (20) and the control mechanism (40) are housed in a part (54) of the base (50) projecting forwards such that it contains the electromagnet (20) at the top of the base followed in sequence towards the bottom by the control mechanism (40), the protection device (30) and a compartment (55) for an auxiliary contacts add-on block(56).

7. Contactor - circuit breaker according to claim 5, **characterized by** the fact that the power supply terminals (35) of the coil (21) of the electromagnet (20) are housed adjacent to the protection module (30) in the compartment (55) for the auxiliary contacts add-on block (56).

8. Contactor - circuit breaker according to claim 5, **characterized by** the fact that the base (50) is provided with a compartment (57 for housing a communication add-on block (58), between the protection module (30) and the compartment (55) for the auxiliary contacts add-on block (56).

9. Contactor - circuit breaker comprising:
- power conductors provided with poles with separable fixed and mobile contacts to which extinguishing chambers are associated,
- an electromagnet (20) and a protection device (30) that can act on mobile contacts (11) in response to a deliberate control and respectively to detection of an electrical fault, through at least a multi-pole drive device, the protection device comprising means (31) to detect currents carried by the power conductors, and a first electrical link (33B) with the electromagnet (20),
**characterized by** the fact that:
- the protection device (30) is interchangeable and electronic means (36) for converting the power supply voltage into a voltage suitable for the electromagnet (20) are associated with the protection device,
- the protection device is connected through a second electrical link (33A) to a magnetic tripping device (41) capable of controlling a contact control mechanism (40) capable of holding the contacts open and that can be reset by a manual control button (42),
- the control mechanism (40) is provided with a bistable automatic control part (40B) controlled by the electromagnet (20) and a bistable trip part (40A) controlled by the magnetic tripping device (41) to act on the contact poles.

10. Contactor - circuit breaker according to claim 9, **characterized by** the fact that the protection device (30) comprises means (34) of supplying power to the coil (21) of the electromagnet (20) with an approximately constant current in the various phases of the contactor - circuit breaker in the On condition.
